# EUROPÄISCHE PATENTSCHRIFT

(11) **EP 1 254 815 B1**
(45) Veröffentlichungstag und Bekanntmachung des Hinweises auf die Patenterteilung: **28.12.2005**
(21) Anmeldenummer: 01123845.8
(22) Anmeldetag: 05.10.2001
(51) Int. Cl.: B60T 7/10

(54) **Betätigungsvorrichtung für eine Feststellbremse**
Actuating mechanism for a parking brake
Actionneur d'un frein de stationnement

(30) Priorität: 05.05.2001 DE 20107646 U
(43) Veröffentlichungstag der Anmeldung: 06.11.2002
(73) Patentinhaber: Dietz-automotive GmbH & Co. KG, 73265 Dettingen unter Teck (DE)
(72) Erfinder: Bauer, Hans, 73265 Dettingen/Teck (DE)
(74) Vertreter: Ruckh, Rainer Gerhard

(56) Entgegenhaltungen:
- EP-A- 0 933 270
- EP-A- 1 127 760
- EP-A- 1 273 495
- DE-A- 19 521 159
- US-A- 5 205 184

## Beschreibung

Die Erfindung betrifft eine Betätigungsvorrichtung für eine Feststellbremse gemäß dem Oberbegriff des Anspruchs 1.

Eine derartige Betätigungsvorrichtung ist aus der US 5,205,184 bekannt. Diese Betätigungsvorrichtung weist einen Handbremshebel mit einem Vorderteil zur Führung einer Betätigungsstange und einem bezüglich dem Vorderteil verbreiterten Grundkörper zur Aufnahme der Sperrklinke einer Festsetzeinrichtung auf. Dabei sind das Vorderteil und der Grundkörper einstückig ausgebildet und vorzugsweise als Kunststoffteil ausgebildet. Der Grundkörper des Handbremshebels ist von einer Kassette aus Metall umschlossen, an welcher das Sperrsegment der Festsetzeinrichtung fixiert ist.

Aus der EP 0,933,270 A1 ist eine Betätigungsvorrichtung bekannt, welche einen aus einem Kunststoffteil bestehenden einteiligen Handbremshebel aufweist. Der Handbremshebel weist ein geschlossenes Rohrsegment zur Aufnahme von Betätigungsmitteln für eine Festsetzeinrichtung auf. Weiterhin umfasst der Handbremshebel ein Körperteil mit zwei in Abstand zueinander verlaufenden, symmetrisch ausgebildeten Platten. In den Zwischenraum zwischen den Platten ist eine Aufnahme einführbar, an welcher der Handbremshebel schwenkbar gelagert wird.

Eine weitere Betätigungsvorrichtung ist aus der DE 195 21 159 C2 bekannt. Diese Betätigungsvorrichtung umfasst einen Handbremshebel, der an einem Lagerbock schwenkbar gelagert ist. Zur Betätigung der Feststellbremse ist eine Betätigungsstange vorgesehen, die in Eingriff mit einer Festsetzeinrichtung steht. Die Festsetzeinrichtung besteht aus einem Sperrsegment und einer Sperrklinke. Das Sperrsegment ist am Lagerbock befestigt und weist eine Leiste mit Rastzähnen auf. Die Sperrklinke ist an einem Lagerzapfen des Handbremshebels schwenkbar gelagert und über ein Federelement vorgespannt. Am vorderen Ende der Betätigungsstange ist ein Druckknopf vorgesehen, der über die rohrförmige Aufnahme hervorsteht und von einer Bedienperson betätigbar ist.

Zur Betätigung der Feststellbremse wird der Handbremshebel geschwenkt. Die Schwenkbewegung wird über die Betätigungsstange auf die Sperrklinke übertragen. In einer Endposition rastet die Sperrklinke an dem Sperrsegment ein und fixiert den Handbremshebel in der entsprechenden Position.

Zur Lösung des Handbremshebels aus dieser Position wird der Druckknopf betätigt, wodurch die Sperrklinke vom Sperrsegment gelöst wird. Somit kann der Handbremshebel wieder in seine Ausgangsposition gebracht werden.

Der Handbremshebel besteht aus zwei Schalen, die an ihren Oberseiten mittels einer Abdeckblende abgeschlossen sind. Die Schalen weisen zur Aufnahme der Betätigungsstange jeweils einen halbkreisförmigen Ansatz auf. Diese Ansätze ergänzen sich zu einer rohrförmigen Aufnahme, in welcher der vordere Teil der Betätigungsstange geführt ist. Der hintere Teil der Betätigungsstange, der bezüglich des vorderen Teils geneigt verläuft, ist an die Sperrklinke der Betätigungsstange gekoppelt.

Die Schalen des Handbremshebels bestehen vorzugsweise aus einer Leichtmetall-Gusslegierung. Damit weist der Handbremshebel zwar eine hohe Stabilität auf, jedoch weist der Handbremshebel aufgrund seiner massiven mehrteiligen Bauweise ein unerwünscht hohes Gewicht auf.

Nachteilig hierbei ist weiterhin, dass der Kostenaufwand zur Herstellung des mehrteilig ausgebildeten Handbremshebels unerwünscht hoch ist. Auch die Montage der Betätigungsvorrichtung mit einem derartigen Handbremshebel ist unerwünscht aufwendig. Die Betätigungsstange muss vor Zusammenfügen der Schalen des Handbremshebels in einen Ansatz einer Schale eingelegt werden, wobei die Betätigungsstange zudem gelenkig mit der Sperrklinke verbunden werden muss. Schließlich müssen die Schalen zusammengefügt und die Abdeckblende auf die Schalen aufgesetzt werden.

Der Erfindung liegt die Aufgabe zugrunde eine Betätigungsvorrichtung der eingangs genannten Art so auszubilden, dass diese bei möglichst geringem Gewicht und geringen Herstellkosten eine möglichst hohe Stabilität aufweist.

Zur Lösung dieser Aufgabe sind die Merkmale des Anspruchs 1 vorgesehen. Vorteilhafte Ausführungsformen und zweckmäßige Weiterbildungen sind in den Unteransprüche beschrieben.

Die Erfindung zeichnet sich dadurch aus, dass der einstückig ausgebildete Handbremshebel mit der die Betätigungsstange umschließenden Führung eine hohe Stabilität bei geringem Eigengewicht aufweist.

Das Eigengewicht des Handbremshebels ist erfindungsgemäß dadurch reduziert, dass in die Führung Ausnehmungen eingearbeitet sind. Die Ausnehmungen sind an den gegenüberliegenden Seitenflächen der Führung ausmündend in Längsrichtung der Führung zweckmäßig alternierend angeordnet, so dass jeweils zwei aufeinander folgende Ausnehmungen an gegenüberliegenden Seitenflächen der Führung ausmünden. Die dadurch zwischen den Ausnehmungen verbleibenden Wandsegmente der Führung verlaufen dadurch jeweils in einem Neigungswinkel zur Längsachse, wobei die einzelnen Wandsegmente kontinuierlich ineinander übergehen und so eine Verstrebung mit einer hohen Festigkeit und Streifigkeit bilden.

Die Ausnehmungen in der Führung sind vorzugsweise identisch ausgebildet. Jede Ausnehmung ist dabei derart ausgebildet, dass sich deren Querschnitt zur Ausmündung an der jeweiligen Seitenfläche der Führung hin kontinuierlich verbreitert. Dabei ist die Ausnehmung seitlich von jeweils einer eine Grenzfläche eines Wandsegments bildenden Schrägfläche begrenzt.

Die so ausgebildeten Ausnehmungen können in als Gussteilen ausgebildeten Handbremshebeln auf besonders einfache Weise hergestellt werden, in dem an der Gießform zur Herstellung des Gussteils entsprechende Formteile vorgesehen werden. Wesentlich hierbei ist, dass durch die spezielle Ausbildung der Ausnehmungen die Entfernung des Gussteils aus der Gießform nicht behindert ist.

In einer vorteilhaften Ausführungsform der Erfindung ist zur Kopplung der Betätigungsstange an das Sperrsegment der Festsetzeinrichtung eine Aufnahme vorgesehen, welche mit der Betätigungsstange in der Führung verschiebbar gelagert ist. Ein freies Ende des Sperrsegments ist dabei mit Spiel in der Aufnahme gelagert. Die Aufnahme selbst ist zwischen dem hinteren Ende der Betätigungsstange und einer auf einem Bolzen geführten Druckfeder gelagert.

Die Führung des Handbremshebels ist dabei bevorzugt im Bereich der Aufnahme zur Seite hin offen. Somit kann die Aufnahme über diese Öffnung seitlich in die Führung eingeführt werden, wobei die Aufnahme zwischen der Betätigungsstange und der auf dem Bolzen gelagerten Druckfeder eingeclipst wird.

Die Sperrklinke weist an ihrem oberen freien Ende ein Segment auf, welches in eine Aussparung der Aufnahme einsetzbar ist, so dass das Segment in der Aufnahme mit Spiel gelagert ist.

Dadurch wird einerseits gewährleistet, dass die Sperrklinke in einer bestimmten Raststellung an dem Sperrsegment sicher gehalten ist. Andererseits ist dadurch gewährleistet, dass die Betätigungsstange von der Bewegung der Sperrklinke entlang des Sperrsegments bei Schwenken des Handbremshebels entkoppelt ist. Damit wird erreicht, dass die Betätigungsstange und insbesondere ein an dessen vorderem Ende angebrachter Druckknopf während der Schwenkbewegung des Handbremshebels in seiner Ruhestellung verbleibt.

Die Erfindung wird im Nachstehenden anhand der Zeichnungen erläutert. Es zeigen:
- Figur 1:: Seitenansicht eines Ausführungsbeispiels der erfindungsgemäßen Betätigungsvorrichtung für eine Feststellbremse.
- Figur 2:: Perspektivische Darstellung der Betätigungsvorrichtung gemäß Figur 1.

In den Zeichnungen ist ein Ausführungsbeispiel der erfindungsgemäßen Betätigungsvorrichtung 1 für eine Feststellbremse in einem Fahrzeug dargestellt.

Die Betätigungsvorrichtung 1 weist einen Handbremshebel 2 auf, welcher schwenkbar an einem Lagerbock 3 gelagert ist. Der Lagerbock 3 besteht aus wenigstens einem Gussteil, wobei das Gussteil vorzugsweise aus einer Leichtmetall-Legierung besteht.

Der Handbremshebel 2 weist einen Grundkörper auf, an dessen Oberseite eine Führung 4 anschließt. Der Handbremshebel 2 ist einstückig ausgebildet und besteht ebenfalls aus einem Gussteil. Das Gussteil besteht auch in diesem Fall aus einer Leichtmetall-Legierung. Vorzugsweise werden sowohl für den Lagerbock 3 als auch für den Handbremshebel 2 Aluminium- oder Magnesium-Legierungen verwendet. Im Bereich des Grundkörpers ist der Handbremshebel 2 mittels eines Lagerzapfens 5 um eine horizontal verlaufende Schwenkachse gelagert.

Zudem ist am Lagerbock 3 eine Zugstange 6 gelagert, die mit dem Handbremshebel 2 gekoppelt ist. Die jeweilige Stellung des Handbremshebels 2 wird über diese Zugstange 6 auf die nicht dargestellte Feststellbremse des Fahrzeugs übertragen.

In der Führung 4 ist eine Betätigungsstange 7 gelagert. Die Betätigungsstange 7 besteht aus einem stangenförmigen Kunststoffteil, welches eine längs einer Geraden verlaufende Längsachse und einen kreisförmigen Querschnitt aufweist.

Die Betätigungsstange 7 ist über ihre gesamte Länge im Innern der Führung 4 geführt. Die Außenkontur der Führung 4 ist im Wesentlichen zylindrisch ausgebildet und an die Abmessungen der Betätigungsstange 7 angepasst.

Die Betätigungsstange 7 wird über eine Öffnung am vorderen Rand in den Innenraum eingeführt, so dass nur der vordere Rand der Betätigungsstange 7 über die Führung 4 hervorsteht. Auf diesem vorderen Rand der Betätigungsstange 7 wird ein Druckknopf 8 aufgesetzt und dort mittels Rastmitteln oder dergleichen fixiert.

In den Innenraum der Führung 4 ist weiterhin ein Einsatz 9 eingeführt, welcher die Betätigungsstange 7 gegen ein Herauslösen aus der Führung 4 sichert. Der Druckknopf 8 und der Einsatz 9 bestehen vorzugsweise jeweils aus einem Kunststoffteil.

Die Betätigungsstange 7 ist mit einer Festsetzeinrichtung gekoppelt. Mit dieser Festsetzeinrichtung kann der Handbremshebel 2 in einer vorgegebenen Schwenkstellung fixiert werden.

Die Festsetzeinrichtung weist im Wesentlichen eine Sperrklinke 10 und ein Sperrsegment 11 auf. Das Sperrsegment 11 ist am Lagerbock 3 befestigt und weist eine Leiste mit Rastzähnen 12 auf. Längs der Leiste sind die jeweils identisch ausgebildeten Rastzähne 12 hintereinander angeordnet.

Die Sperrklinke 10 ist an einem Lagerzapfen 13 des Handbremshebels 2 um eine horizontal verlaufende Schwenkachse schwenkbar gelagert und über ein Federelement 14 vorgespannt.

Die Schwenkachse läuft durch das Zentrum der Sperrklinke 10 und unterteilt diese in zwei beidseits zur Schwenkachse verlaufende Schwenkarme. Der erste Schwenkarm der Sperrklinke 10 ist an die Betätigungsstange 7 gekoppelt. Der zweite Schwenkarm der Sperrklinke 10 steht in Eingriff mit dem Sperrsegment 11. Hierzu weist die Sperrklinke 10 am vorderen Ende des zweiten Schwenkarmes eine Rastnase 15 auf, die an den Rastzähnen 12 des Sperrsegments 11 eingerastet werden kann.

Die Sperrklinke 10 weist am oberen Ende des ersten Schwenkarmes ein Segment 16 auf, welches zur Ankopplung an die Betätigungsstange 7 mit Spiel in einer Aufnahme 17 gelagert ist.

Das Segment 16 weist im Wesentlichen die Form eines Kreisscheibensegments auf und bildet eine Querschnittsverbreiterung am vorderen Ende des ersten Schwenkarmes der Sperrklinke 10.

Die Aufnahme 17 besteht aus einem Kunststoffteil und ist in der Führung 4 des Handbremshebels 2 gelagert. Dabei ist die Aufnahme 17 zwischen dem hinteren Ende der Betätigungsstange 7 und einer auf einem Bolzen 18 gelagerten Druckfeder 19 festgeklemmt. Der Bolzen 18 weist im Wesentlichen eine zylindrische Form auf und ist Bestandteil des Handbremshebels 2. Die Längsachse des Bolzens 18 verläuft koaxial zu der in der Führung 4 gelagerten Betätigungsstange 7.

Die Führung 4 weist im Bereich der Aufnahme 17 eine seitliche Öffnung auf, über welche die Aufnahme 17 in den Innenraum der Führung 4 eingeführt und zwischen der Betätigungsstange 7 und dem Bolzen 18 mit der Druckfeder 19 eingeclipst werden kann.

Die Aufnahme 17 weist eine Aussparung 20 auf. Diese Aussparung 20 ist von zwei Seitenwänden der Aufnahme 17 begrenzt.

In der Aussparung 20 der Aufnahme 17 liegt das Segment 16 am oberen Rand der Sperrklinke 10, wobei das Segment 16 mit vorgegebenem Spiel zwischen den Seitenwänden der Aufnahme 17 liegt. An der Außenseite der ersten Seitenwand der Aufnahme 17 liegt das hintere Ende der Betätigungsstange 7 an, während an der Außenseite der zweiten Seitenwand der Aufnahme 17 der Bolzen 18 mit der Feder liegt.

Der Bolzen 18 weist hierzu einen von seiner Vorderseite hervorstehenden Vorsprung auf, der gegen die Seitenwand der Aufnahme 17 drückt.

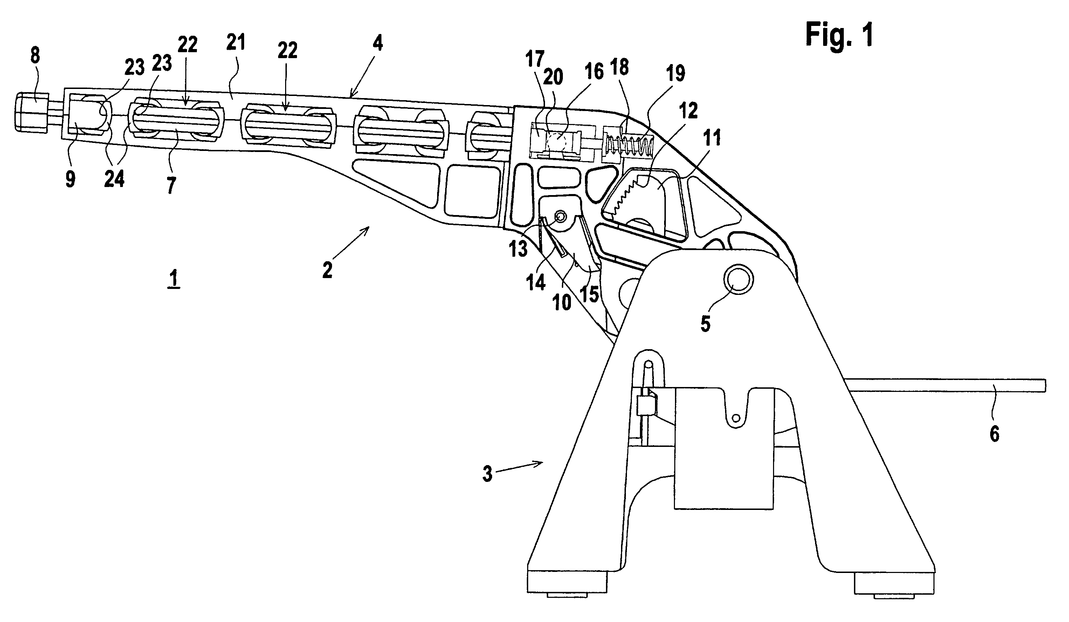

Bei dem in Figur 1 dargestellten Fall befindet sich der Handbremshebel 2 in einer unteren Endposition, so dass die Feststellbremse des Fahrzeugs nicht betätigt ist. Die Rastnase 15 ist gegen einen an die Leiste mit den Rastzähnen 12 anschließenden Abschnitt des Sperrsegments 11 gedrückt.

In dieser Position liegt das Segment 16 der Sperrklinge 10 an einer Seitenwand 18 der Aufnahme 17 an. Dadurch wird ungewolltes Herauslösen der Sperrklinke 10 aus der Ruhestellung vermieden.

Zur Betätigung der Feststellbremse wird der Handbremshebel 2 nach oben geschwenkt, bis dieser eine vorgegebene Sollposition erreicht. In dieser Sollposition rastet die Sperrklinke 10 mit der Rastnase 15 an einer entsprechenden Position der Leiste mit den Rastzähnen 12 ein. In dieser Raststellung liegt das Segment 16 wiederum an der Seitenwand der Aufnahme 17 an, so dass die Sperrklinke 10 gegen ein Lösen von dem Sperrsegment 11 gesichert ist.

Durch Betätigen des Druckknopfes 8 wird die Rasterung der Sperrklinke 10 am Sperrsegment 11 gelöst, worauf der Handbremshebel 2 wieder in seine Ausgangsstellung geschwenkt werden kann.

Während der Schwenkbewegung des Handbremshebels 2 wird die Rastnase 15 der Sperrklinke 10 über die Rastzähne 12 des Sperrsegments 11 bewegt. Durch das fortlaufende Eintauchen und Herauslösen der Rastnase 15 aus den Zwischenräumen zwischen den Rastzähnen 12 führt die Sperrklinke 10 eine oszillierende Bewegung aus.

Da das Segment 16 der Sperrklinke 10 in der Aufnahme 17 mit Spiel geführt ist, wird die Bewegung der Sperrklinke 10 nicht über die Aufnahme 17 auf die Betätigungsstange 7 übertragen, das heißt die Betätigungsstange 7 ist von der Bewegung der Sperrklinke 10 entkoppelt.

Damit ist insbesondere gewährleistet, dass die Bewegung der Sperrklinke 10 nicht auf den Druckknopf 8 übertragen wird, so dass dieser während der Schwenkbewegung des Handbremshebels 2 in einer festen Position verbleibt.

Die Führung 4 des Handbremshebels 2 weist keinen geschlossenen Innenraum zur Aufnahme 17 der Betätigungsstange 7 auf. Die Führung 4 besteht aus einer Folge von kontinuierlich aneinander anschließenden und ineinander übergehenden Wandsegmenten 21, welche eine Folge von Ausnehmungen 22 trennen. In diese Wandsegmente 21 sind Bohrungen 23 eingearbeitet, in welchen die Betätigungsstange 7 geführt ist.

Die Bohrungen 23 liegen symmetrisch zur Längsachse der Führung 4 in Abstand hintereinander. Dabei sind die Wandsegmente 21 über die Länge der Führung 4 gleichmäßig verteilt. Die Durchmesser der Bohrungen 23 sind an den Durchmesser der Betätigungsstange 7 angepasst, so dass die Betätigungsstange 7 mit geringem Spiel in den Bohrungen 23 geführt ist. Dadurch ist die Betätigungsstange 7 in der Führung 4 sicher gelagert und kann dort in Längsrichtung verschoben werden.

Die Ausnehmungen 22 in der Führung 4 sind jeweils identisch ausgebildet. Jede Ausnehmung 22 mündet an einer Seitenfläche der Führung 4 aus, so dass die Betätigungsstange 7 durch die Ausnehmung 22 sichtbar ist. Der Boden einer Ausnehmung 22 ist von einem Abschnitt eines Wandsegments 21 gebildet, welches an der der Ausnehmung 22 gegenüberliegenden Seite der Führung 4 liegt. Die Innenwand dieses Abschnitts des Wandsegments 21 ist an die Mantelfläche der Betätigungsstange 7 angepasst, so dass die Mantelflache der Betätigungsstange 7 dicht an der Innenwand dieses Abschnitts des Wandsegments 21 anliegt.

Die Höhe der Ausnehmung 22 ist geringfügig kleiner als die Höhe der Führung 4, so dass die Ausnehmung 22 an ihrer Oberseite und Unterseite jeweils durch einen hohlzylindrischen Abschnitt der Wand der Führung 4 begrenzt ist.

Die Breite der Ausnehmung 22 nimmt vom Boden zur Ausmündung an der Seitenfläche der Führung 4 hin kontinuierlich zu. Dabei ist die Ausnehmung 22 seitlich von zwei Schrägflächen 24 begrenzt. Die Schrägflächen 24 sind jeweils von den Grenzflächen der an die Ausnehmung 22 seitlich angrenzenden Wandsegmente 21 der Führung 4 gebildet.

Die Ausnehmung 22 und insbesondere deren Schrägflächen 24 sind symmetrisch zu einer senkrecht zur Längsachse der Führung 4 verlaufenden Symmetrieebene ausgebildet, welche durch das Zentrum der Ausnehmung 22 verläuft.

Die Schrägflächen 24 verlaufen jeweils in einer Ebene die in einem Neigungswinkel zur Symmetrieebene verläuft. Vorzugsweise beträgt dieser Neigungswinkel 45°.

Die durch Schrägflächen 24 begrenzten und sich zur Seitenfläche der Führung 4 hin kontinuierlich verbreiternden Ausnehmungen 22 können bei dem Gießprozess zur Herstellung des den Handbremshebel 2 bildenden Gussteils besonders einfach hergestellt werden. Insbesondere ist in diesem Fall eine besonders einfache Entfernung des Gussteils aus der Gießform gewährleistet. Prinzipiell können die Ausnehmungen 22 anstelle von in einer Ebene verlaufenden Schrägflächen 24 auch von gekrümmten Flächen begrenzt sein.

An jeder der Schrägflächen 24 mündet eine der Bohrungen 23 aus, in welcher die Betätigungsstange 7 geführt ist. Entsprechend der Neigung der Schrägfläche 24 zur Symmetrieebene der Ausnehmung 22 weist die Bohrung 23 eine elliptische Randkontur auf, wobei deren Projektion auf die Symmetrieebene eine Kreislinie ergibt.

Der Durchmesser dieser Kreislinie entspricht dem Durchmesser der Bohrung 23, in welcher die Betätigungsstange 7 geführt ist.

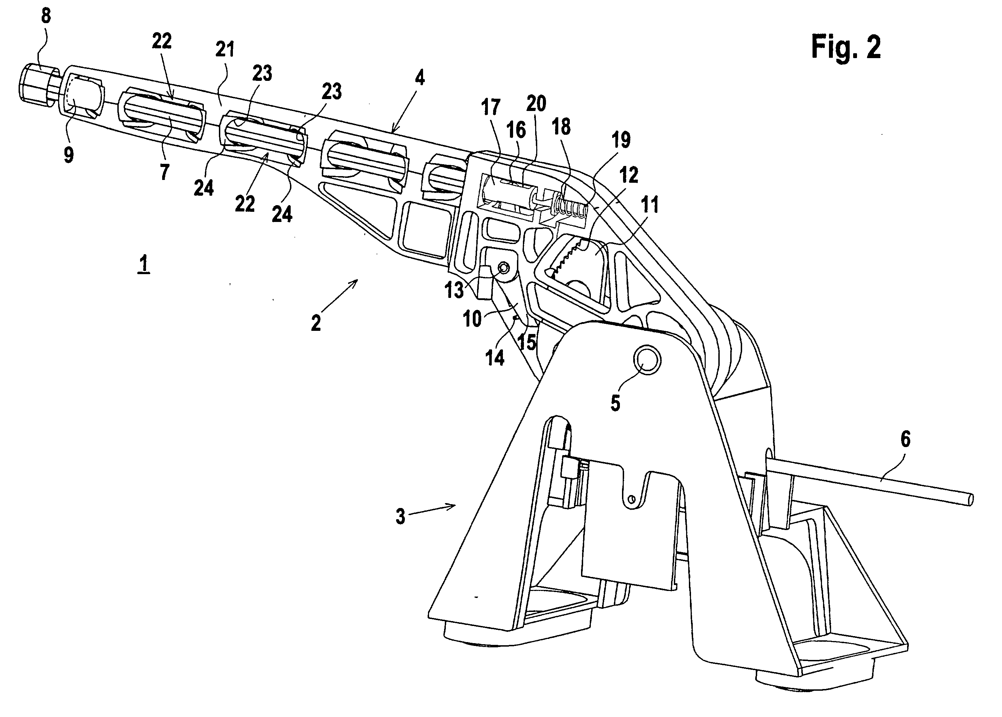

Wie aus den Figuren 1 und 2 ersichtlich sind an der Führung 4 mehrere in Längsrichtung der Führung 4 hintereinander angeordnete Ausnehmungen 22 vorgesehen. Die Ausnehmungen 22 sind alternierend derartig angeordnet, dass jeweils zwei aufeinander folgende Ausnehmungen 22 an gegenüberliegenden Seitenflächen der Führung 4 ausmünden. Dabei sind die an einer Seitenfläche ausmündenden Ausnehmungen 22 derart versetzt zu den an der anderen Seitenfläche ausmündenden Ausnehmungen 22 angeordnet, dass jeweils das Zentrum einer Ausnehmung 22 auf einer Seitenfläche zwischen zwei benachbarten Ausnehmungen 22 liegt, die in Abstand hintereinander liegend an der gegenüberliegenden Seitenfläche ausmünden. Dabei bildet der an dieser Seitenfläche liegende Abschnitt des Wandsegments 21 zwischen diesen Ausnehmungen 22 gleichzeitig den Boden der Ausnehmung 22, die auf Lücke diesen Ausnehmungen 22 gegenüberliegt.

Die auf diese Weise durch die Ausnehmungen 22 begrenzten Wandsegmente 21 verlaufen jeweils schräg zur Längsachse der Führung 4 und ergänzen sich zu einer Verstrebung, die eine hohe Festigkeit und Steifigkeit aufweist. Aufgrund der Ausnehmungen 22 weist die Führung 4 und damit der gesamte Handbremshebel 2 zudem ein geringes Gewicht auf.

### Bezugszeichenliste

- (1): Betätigungsvorrichtung
- (2): Handbremshebel
- (3): Lagerbock
- (4): Führung
- (5): Lagerzapfen
- (6): Zugstange
- (7): Betätigungsstange
- (8): Druckknopf
- (9): Einsatz
- (10): Sperrklinke
- (11): Sperrsegment
- (12): Rastzahn
- (13): Lagerzapfen
- (14): Federelement
- (15): Rastnase
- (16): Segment
- (17): Aufnahme
- (18): Bolzen
- (19): Druckfeder
- (20): Aussparung
- (21): Wandsegment
- (22): Ausnehmung
- (23): Bohrung
- (24): Schrägfläche

## Patentansprüche

1. Betätigungsvorrichtung (1) für eine Feststellbremse mit einem an einem Lagerbock (3) schwenkbar gelagerten Handbremshebel (2), welcher mittels einer Festsetzeinrichtung in einer vorgegebenen Schwenkstellung fixierbar ist, und mit einer im Handbremshebel (2) geführten und in Wirkverbindung mit der Festsetzeinrichtung stehenden Betätigungsstange (7), wobei der Handbremshebel (2) eine mit diesem einstückig ausgebildete Führung (4) aufweist, in welcher die Betätigungsstange (7) in Längsrichtung verschiebbar gelagert ist, **dadurch gekennzeichnet, dass** die Führung (4) mehrere koaxiale, in Längsrichtung hintereinander angeordnete Bohrungen (23) aufweist, in welchen die Betätigungsstange (7) über ihre gesamte Länge geführt ist, und dass die Bohrungen (23) in Wandsegmenten (21) der Führung (4) eingearbeitet sind, wobei die Wandsegmente (21) durch Ausnehmungen (22) in der Führung (4) begrenzt sind, wobei in Längsrichtung der Führung (4) mehrere Ausnehmungen (22) hintereinander angeordnet sind, und wobei jeweils zwei aufeinander folgende Ausnehmungen (22) an gegenüberliegenden Seitenflächen der Führung (4) ausmünden.

2. Betätigungsvorrichtung nach Anspruch 1, **dadurch gekennzeichnet, dass** der Handbremshebel (2) mit der Führung (4) als Gussteil ausgebildet ist.

3. Betätigungsvorrichtung nach Anspruch 2, **dadurch gekennzeichnet, dass** der Handbremshebel (2) mit der Führung (4) aus einer Leichtmetall-Gusslegierung besteht.

4. Betätigungsvorrichtung nach einem der Ansprüche 1 - 3, **dadurch gekennzeichnet, dass** die Betätigungsstange (7) aus einem Kunststoffteil besteht, dessen Längsachse längs einer Geraden verläuft.

5. Betätigungsvorrichtung nach einem der Ansprüche 1 bis 4, **dadurch gekennzeichnet, dass** sich jede Ausnehmung (22) zu der Ausmündung an der jeweiligen Seitenfläche der Führung (4) kontinuierlich verbreitert.

6. Betätigungsvorrichtung nach Anspruch 5, **dadurch gekennzeichnet, dass** jede Ausnehmung (22) seitlich von zwei jeweils eine Grenzfläche eines Wandsegments (21) bildenden Schrägflächen (24) begrenzt ist.

7. Betätigungsvorrichtung nach Anspruch 6, **dadurch gekennzeichnet, dass** die Schrägflächen (24) symmetrisch zu einer senkrecht zur Längsachse der Führung (4) orientierten Symmetrieebene der Ausnehmung (22) verlaufen.

8. Betätigungsvorrichtung nach Anspruch 7, **dadurch gekennzeichnet, dass** die Schrägflächen (24) in einem Neigungswinkel von 45° zur Symmetrieebene der Ausnehmung (22) verlaufen.

9. Betätigungsvorrichtung nach einem der Ansprüche 6 bis 8, **dadurch gekennzeichnet, dass** die an einer Schrägfläche (24) ausmündende Bohrung (23) eine elliptische Randkontur aufweist, wobei deren Projektion auf die Symmetrieebene der Ausnehmung (22) eine Kreislinie bildet, deren Durchmesser an den Außendurchmesser der Betätigungsstange (7) angepasst ist.

10. Betätigungsvorrichtung nach einem der Ansprüche 1 bis 9, **dadurch gekennzeichnet, dass** die an einer ersten Seitenfläche der Führung (4) ausmündenden Ausnehmungen (22) in Längsrichtung der Führung (4) versetzt zu den an der zweiten Seitenfläche der Führung (4) ausmündenden Ausnehmungen (22) angeordnet sind.

11. Betätigungsvorrichtung nach Anspruch 10, **dadurch gekennzeichnet, dass** das Zentrum einer an der ersten Seitenfläche ausmündenden Ausnehmung (22) zwischen zwei in Abstand nebeneinander liegenden, an der zweiten Seitenfläche der Führung (4) ausmündenden Ausnehmungen (22) liegt.

12. Betätigungsvorrichtung nach Anspruch 11, **dadurch gekennzeichnet, dass** die Wandsegmente (21) der Führung (4) kontinuierlich ineinander übergehend angeordnet sind, wobei ein an einer ersten Seitenfläche liegender Abschnitt eines Wandsegments (21) zwei benachbarte, an dieser Seitenfläche ausmündende Ausnehmungen (22) trennt, und wobei dieses Wandsegment (21) den Boden der zwischen diesen Ausnehmungen (22) an der gegenüberliegenden Seitenfläche der Führung (4) ausmündenden Ausnehmung (22) bildet.

13. Betätigungsvorrichtung (1) für eine Feststellbremse mit einem an einem Lagerbock (3) schwenkbar gelagerten Handbremshebel (2), welcher mittels einer Festsetzeinrichtung in einer vorgegebenen Schwenkstellung fixierbar ist, und mit einer im Handbremshebel (2) geführten und in Wirkverbindung mit der Festsetzeinrichtung stehenden Betätigungsstange (7), wobei der Handbremshebel (2) eine mit diesem einstückig ausgebildete Führung (4) aufweist, in welcher die Betätigungsstange (7) in Längsrichtung verschiebbar gelagert ist, **dadurch gekennzeichnet, dass** die Festsetzeinrichtung ein am Lagerbock (3) fixiertes Sperrsegment (11) und eine beweglich gelagerte Sperrklinke (10) aufweist, wobei die Sperrklinke (10) an das hintere Ende der in der Führung (4) liegenden Betätigungsstange (7) gekoppelt ist, dass zur Kopplung der Betätigungsstange (7) an das Sperrsegment (11) eine Aufnahme (17) vorgesehen ist, welche mit der Betätigungsstange (7) in der Führung (4) verschiebbar gelagert ist und in welcher ein freies Ende der Sperrklinke (10) mit Spiel gelagert ist, wobei die Aufnahme (17) zwischen dem hinteren Rand der Betätigungsstange (7) und einer auf einem Bolzen (18) geführten Druckfeder (19) festgeklemmt ist.

14. Betätigungsvorrichtung nach Anspruch 13, **dadurch gekennzeichnet, dass** die Längsachse des Bolzens (18) koaxial zur Längsachse der Betätigungsstange (7) verläuft.

15. Betätigungsvorrichtung nach einem der Ansprüche 13 oder 14, **dadurch gekennzeichnet, dass** die Aufnahme (17) von einem Kunststoffteil gebildet ist, wobei die Außenseiten von zwei gegenüberliegenden Seitenwänden des Kunststoffteils Auflagen für die Betätigungsstange (7) und die Druckfeder (19) mit dem Bolzen (18) bilden, und wobei das Kunststoffteil eine Aussparung (20) aufweist, in welcher ein Segment (16) am oberen Rand der Sperrklinke (10) mit Spiel gelagert ist.

16. Betätigungsvorrichtung nach Anspruch 15, **dadurch gekennzeichnet, dass** die Sperrklinke (10) in einer Raststellung am Sperrsegment (11) durch die Aufnahme (17) fixiert ist, und dass bei Schwenken des Handbremshebels (2) die Sperrklinke (10) entlang des Sperrsegments (11) geführt ist, wobei die Betätigungsstange (7) von der durch den Kontakt mit dem Sperrsegment (11) induzierten Bewegung der Sperrklinke (10) durch die Bewegung des Segments (16) der Sperrklinke (10) in der Aufnahme (17) entkoppelt ist.

## Claims

1. Actuating device (1) for a parking brake, with a handbrake lever (2) which is pivotably mounted at a bearing block (3) and which is fixable in a predetermined pivot setting by means of a fixing device, and with an actuating rod (7) which is guided in the handbrake lever (2) and disposed in operative connection with the fixing device, wherein the handbrake lever (2) has a guide (4), which is constructed integrally therewith and in which the actuating rod (7) is guided to be displaceable in longitudinal direction, **characterised in that** the guide (4) comprises several coaxial bores (23), which are arranged in succession in longitudinal direction and in which the actuating rod (7) is guided over its entire length, and that the bores (23) are formed in wall segments (21) of the guide (4), wherein the wall segments (21) are bounded by recesses (22) in the guide (4), wherein several recesses (22) are arranged one after the other in the longitudinal direction of the guide (4) and wherein in each instance two successive recesses (22) open at opposite side surfaces of the guide (4).

2. Actuating device according to claim 1, **characterised in that** the handbrake lever (2) together with the guide (4) is constructed as a cast part.

3. Actuating device according to claim 2, **characterised in that** the handbrake lever (2) together with the guide (4) consists of a light metal alloy casting.

4. Actuating device according to any one of claims 1 to 3, **characterised in that** the actuating rod (7) consists of a plastics material part, the longitudinal axis of which extends along a straight line.

5. Actuating device according to any one of claims 1 to 4, **characterised in that** each recess (22) continuously widens towards the opening at the respective side surface of the guide (4).

6. Actuating device according to claim 5, **characterised in that** each recess (22) is laterally bounded in each instance by two inclined surfaces (24) each forming a boundary surface of a wall segment (21).

7. Actuating device according to claim 6, **characterised in that** the inclined surfaces (24) extend symmetrically with respect to a plane of symmetry, which is oriented perpendicularly to the longitudinal axis of the guide (4), of the recess (22).

8. Actuating device according to claim 7, **characterised in that** the inclined surfaces (24) extend at an angle of inclination of 45° relative to the plane of symmetry of the recess (22).

9. Actuating device according to any one of claims 6 to 8, **characterised in that** the bore (23) opening at an inclined surface (24) has an elliptical edge contour, wherein the projection thereof forms on the plane of symmetry of the recess (22) a circular line, the diameter of which is matched to the external diameter of the actuating rod (7).

10. Actuating device according to any one of claims 1 to 9, **characterised in that** the recesses (22) opening at a first side surface of the guide (4) are arranged to be offset in longitudinal direction of the guide (4) relative to the recesses (22) opening at the second side surface of the guide (4).

11. Actuating device according to claim 10, **characterised in that** the centre of a recess (22) opening at the first side surface lies between two recesses (22) which are disposed adjacent to one another at a spacing and which open at the second side surface of the guide (4).

12. Actuating device according to claim 11, **characterised in that** the wall segments (21) of the guide (4) are arranged to continuously go over into one another, wherein a section of a wall segment (21) lying at a first side surface separates two adjacent recesses (22) opening at this side surface, and wherein this wall segment (21) forms the base of the recess (22) opening between these recesses (22) at the opposite side surface of the guide (4).

13. Actuating device (1) for a parking brake, with a handbrake lever (2) which is pivotably mounted at a bearing block (3) and which is fixable in a predetermined pivot setting by means of a fixing device, and with an actuating rod (7) which is guided in the handbrake lever (2) and disposed in operative connection with the fixing device, wherein the handbrake lever (2) has a guide (4), which is constructed integrally therewith and in which the actuating rod (7) is guided to be displaceable in longitudinal direction, **characterised in that** the fixing device comprises a blocking segment (11) fixed to the bearing block (3) and a movably mounted locking catch (10), wherein the locking catch (10) is coupled to the rearward end of the actuating rod (7) lying in the guide (4), that for coupling of the actuating rod (7) to the locking segment (11) there is provided a mount (17) which together with the actuating rod (7) is slidably mounted in the guide (4) and in which a free end of the locking catch (10) is mounted with play, wherein the mount (17) is fixedly clamped between the rearward edge of the actuating rod (7) and a compression spring (19) guided on a pin (18).

14. Actuating device according to claim 13, **characterised in that** the longitudinal axis of the pin (18) extends coaxially with respect to the longitudinal axis of the actuating rod (7).

15. Actuating device according to one of claims 13 and 14, **characterised in that** the mount (17) is formed from a plastics material part, wherein the outer sides of two opposite side walls of the plastics material part form supports for the actuating rod (7) and for the compression spring (19) together with the pin (18), and wherein the plastics material part has a cut-out (20) in which a segment (16) is mounted with play at the upper edge of the locking catch (10).

16. Actuating device according to claim 15, **characterised in that** the locking catch (10) is fixed in a detent setting at the locking segment (11) by the mount (17) and that on pivotation of the handbrake lever (2) the locking catch (10) is guided along the locking segment (11), wherein the actuating rod (7) is uncoupled from the movement, which is induced by the contact with the locking segment (11), of the locking catch (10) by the movement of the segment (16) of the locking catch (10) in the mount (17).

## Revendications

1. Actionneur (1) pour un frein de stationnement, comprenant un levier (2) de frein à main monté à pivotement sur un sabot de montage (3) et pouvant être consigné à demeure, au moyen d'un dispositif d'arrêt, dans une position préétablie prise par pivotement ; et une tige d'actionnement (7) guidée dans le levier (2) de frein à main, et en liaison opérante avec le dispositif d'arrêt, ledit levier (2) de frein à main étant muni d'un guide (4) ménagé d'un seul tenant avec ledit levier, et dans lequel ladite tige d'actionnement (7) est logée à coulissement dans le sens longitudinal, **caractérisé par le fait que** le guide (4) comporte plusieurs perçages coaxiaux (23) disposés en succession dans le sens longitudinal, dans lesquels la tige d'actionnement (7) est guidée sur toute sa longueur ; et **par le fait que** lesdits perçages (23) sont pratiqués dans des segments de paroi (21) du guide (4), lesdits segments de paroi (21) étant délimités par des évidements (22) façonnés dans le guide (4), plusieurs évidements (22) étant agencés en succession dans le sens longitudinal du guide (4), et deux évidements respectifs (22), se succédant mutuellement, débouchant dans des faces latérales opposées dudit guide (4).

2. Actionneur selon la revendication 1, **caractérisé par le fait que** le levier (2) de frein à main est réalisé, avec le guide (4), sous la forme d'une pièce venue de coulée.

3. Actionneur selon la revendication 2, **caractérisé par le fait que** le levier (2) de frein à main est constitué, avec le guide (4), d'un alliage coulé en un métal léger.

4. Actionneur selon l'une des revendications 1-3, **caractérisé par le fait que** la tige d'actionnement (7) est constituée d'une pièce en matière plastique, dont l'axe longitudinal s'étend le long d'une droite.

5. Actionneur selon l'une des revendications 1 à 4, **caractérisé par le fait que** chaque évidement (22) s'élargit continûment vers l'embouchure située sur la face latérale considérée du guide (4).

6. Actionneur selon la revendication 5, **caractérisé par le fait que** chaque évidement (22) est délimité, dans le sens latéral, par deux surfaces obliques (24) matérialisant respectivement une surface de délimitation d'un segment de paroi (21).

7. Actionneur selon la revendication 6, **caractérisé par le fait que** les surfaces obliques (24) s'étendent symétriquement par rapport à un plan de symétrie de l'évidement (22) qui est orienté perpendiculairement à l'axe longitudinal du guide (4).

8. Actionneur selon la revendication 7, **caractérisé par le fait que** les surfaces obliques (24) s'étendent selon un angle d'inclinaison de 45° par rapport au plan de symétrie de l'évidement (22).

9. Actionneur selon l'une des revendications 6 à 8, **caractérisé par le fait que** le perçage (23) débouchant sur une surface oblique (24) possède un profil marginal elliptique dont la projection, sur le plan de symétrie de l'évidement (22), forme une ligne circulaire dont le diamètre est adapté au diamètre extérieur de la tige d'actionnement (7).

10. Actionneur selon l'une des revendications 1 à 9, **caractérisé par le fait que** les évidements (22) débouchant sur une première face latérale du guide (4) sont agencés, dans le sens longitudinal dudit guide (4), avec décalage vis-à-vis des évidements (22) débouchant sur la seconde face latérale dudit guide (4).

11. Actionneur selon la revendication 10, **caractérisé par le fait que** le centre d'un évidement (22) débouchant sur la première face latérale se trouve entre deux évidements (22) juxtaposés à distance, débouchant sur la seconde face latérale du guide (4).

12. Actionneur selon la revendication 11, **caractérisé par le fait que** les segments de paroi (21) du guide (4) fusionnent mutuellement, sachant qu'un tronçon d'un segment de paroi (21), situé sur une première face latérale, sépare deux évidements voisins (22) débouchant sur cette face latérale, et sachant que ce segment de paroi (21) matérialise le fond de l'évidement (22) débouchant, entre ces évidements (22), sur la face latérale opposée dudit guide (4).

13. Actionneur (1) pour un frein de stationnement, comprenant un levier (2) de frein à main monté à pivotement sur un sabot de montage (3) et pouvant être consigné à demeure, au moyen d'un dispositif d'arrêt, dans une position préétablie prise par pivotement ; et une tige d'actionnement (7) guidée dans le levier (2) de frein à main, et en liaison opérante avec le dispositif d'arrêt, ledit levier (2) de frein à main étant muni d'un guide (4) ménagé d'un seul tenant avec ledit levier, et dans lequel ladite tige d'actionnement (7) est logée à coulissement dans le sens longitudinal, **caractérisé par le fait que** le dispositif d'arrêt comprend un segment de blocage (11) verrouillé sur le sabot de montage (3) et un cliquet de blocage (10) monté de façon mobile, ledit cliquet de blocage (10) étant accouplé avec l'extrémité postérieure de la tige d'actionnement (7) située dans le guide (4) ; et **par le fait qu'**il est prévu, pour accoupler la tige d'actionnement (7) avec le segment de blocage (11), un logement (17) qui est monté à coulissement dans le guide (4), avec ladite tige d'actionnement (7), et dans lequel une extrémité libre du cliquet de blocage (10) est logée avec jeu, ledit logement (17) étant coincé rigidement entre le bord postérieur de la tige d'actionnement (7) et un ressort de pression (19) guidé sur un tenon (18).

14. Actionneur selon la revendication 13, **caractérisé par le fait que** l'axe longitudinal du tenon (18) s'étend coaxialement à l'axe longitudinal de la tige d'actionnement (7).

15. Actionneur selon l'une des revendications 13 ou 14, **caractérisé par le fait que** le logement (17) est formé d'une pièce en matière plastique, les faces extérieures de deux parois latérales de ladite pièce en matière plastique, opposées l'une à l'autre, formant des appuis destinés à la tige d'actionnement (7) et au ressort de pression (19) associé au tenon (18), et ladite pièce en matière plastique possédant une dépouille (20) dans laquelle est logé, avec jeu, un segment (16) situé sur le bord supérieur du cliquet de blocage (10).

16. Actionneur selon la revendication 15, **caractérisé par le fait que** le cliquet de blocage (10) est consigné à demeure, par l'intermédiaire du logement (17), dans une position encliquetée sur le segment de blocage (11) ; et **par le fait que** ledit cliquet de blocage (10) est guidé le long dudit segment de blocage (11) lors d'un pivotement du levier (2) de frein à main, sachant que la tige d'actionnement (7) est désaccouplée du mouvement dudit cliquet de blocage (10), induit par le contact avec ledit segment de blocage (11), suite au mouvement du segment (16) dudit cliquet de blocage (10) dans le logement (17).
